# EUROPEAN PATENT APPLICATION

(11) **EP 4 507 164 A1**
(43) Date of publication of application: **12.02.2025**
(21) Application number: 23211281.3
(22) Date of filing: 21.11.2023
(51) Int. Cl.: H02J 13/00, H02J 50/12, H02J 50/80, H04B 5/79

(54) **WIRELESS CHARGING CONTROL METHOD AND WIRELESS CHARGING SYSTEM EMPLOYING THE SAME**

(30) Priority: 11.08.2023 CN 202311013072
(71) Applicant: Delta Electronics, Inc., Taoyuan City 33370 (TW)
(72) Inventor: Wang, Ying-Chieh, 32063 Taoyuan City (TW); Liu, Chien-Lung, 32063 Taoyuan City (TW)
(74) Representative: Uexküll & Stolberg

(57) **Abstract**

A wireless charging control method and a wireless charging system (1) employing the same are provided. The wireless charging control method is applicable for the wireless charging system (1) including a transmitter module (10) and a receiver module (20) and includes steps of: (a) by the transmitter module (10), when an input power (Pin) is higher than a threshold power (P_th) or a component temperature (Temp) is higher than a threshold temperature (T_th), determining a target output power according to the input power (Pin) or the component temperature (Temp); (b) by the transmitter module (10), modulating information of the target output power into an input electric energy; (c) by the receiver module (20), receiving and sampling the input electric energy to demodulate the information of the target output power; and (d) by the receiver module (20), converting the input electric energy into the target output power according to the information of the target output power.

## Description

### FIELD OF THE INVENTION

The present disclosure relates to a charging control method and a charging system employing the same, and more particularly to a wireless charging control method and a wireless charging system employing the same.

### BACKGROUND OF THE INVENTION

In wireless power transmission, as a distance between a transmitter coil and a receiver coil increases, leaked magnetic flux also increases. In this case, an input power needs to be significantly increased to maintain a same output power. Therefore, when the distance between the transmitter coil and the receiver coil increases to a certain level, a foreign object detection may be triggered due to excessive power loss, or a low-voltage protection may be triggered due to a low voltage at the receiver side, or an over-temperature protection may be triggered due to overtemperature of components at the transmitter side. Any of the said foreign object detection, low-voltage protection and over-temperature protection would lead to intermittent power transmission and thus affect a stability of wireless power transmission.

Therefore, there is a need of providing a wireless charging control method and a wireless charging system employing the same in order to overcome the drawbacks of the conventional technologies.

### SUMMARY OF THE INVENTION

The present disclosure provides a wireless charging control method and a wireless charging system employing the same. When an input power or a component temperature at a transmitter side is too high, a transmitter circuit is controlled to operate in a special adjustment mode. A receiver side realizes that the transmitter circuit operates in the adjustment mode by sampling the received power, and corresponding turns down the output power, so that the input power is allowed to decrease. Thereby, as a distance between the transmitter and receiver sides increases, the input power is prevented from getting too high and triggering the protection function to interrupt power transmission. Accordingly, a stability of wireless power transmission is improved.

In accordance with an aspect of the present disclosure, a wireless charging control method for a wireless charging system including a transmitter module and a receiver module is provided. The wireless charging control method includes steps of: (a) by the transmitter module, when an input power is higher than a threshold power or a component temperature is higher than a threshold temperature, determining a target output power according to the input power or the component temperature; (b) by the transmitter module, modulating information of the target output power into an input electric energy; (c) by the receiver module, receiving and sampling the input electric energy to demodulate the information of the target output power; and (d) by the receiver module, converting the input electric energy into the target output power according to the information of the target output power.

In accordance with another aspect of the present disclosure, a wireless charging system is provided. The wireless charging system includes a transmitter module and a receiver module. The transmitter module is configured to convert an input power into an input electric energy and transmit the input electric energy. The receiver module is configured to receive the input electric energy, convert the input electric energy into an output electric energy, and provide the output electric energy to a load. The transmitter module and the receiver module are configured to perform the wireless charging control method of the present disclosure.

### BRIEF DESCRIPTION OF THE DRAWINGS

FIG. 1 is a schematic block diagram illustrating a wireless charging system according to an embodiment of the present disclosure;
FIG. 2 and FIG. 3 are schematic block diagrams illustrating the transmitter controller and the driving circuit according to other embodiments of the present disclosure;
FIG. 4 is a schematic oscillogram showing the interrupted driving signal according to an embodiment of the present disclosure;
FIG. 5 is a schematic oscillogram showing the interrupted driving signal according to plural embodiments of the present disclosure;
FIG. 6A exemplifies an implementation of the transmitter module and the transmitter controller of FIG. 1;
FIG. 6B exemplifies an implementation of the receiver module and the receiver controller of FIG. 1;
FIG. 7 is a schematic flow chart illustrating a wireless charging method according to an embodiment of the present disclosure;
FIG. 8 is a schematic flow chart illustrating a wireless charging control method adapted for the transmitter module according to an embodiment of the present disclosure; and
FIG. 9 is a schematic flow chart illustrating a wireless charging control method adapted for the receiver module according to an embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

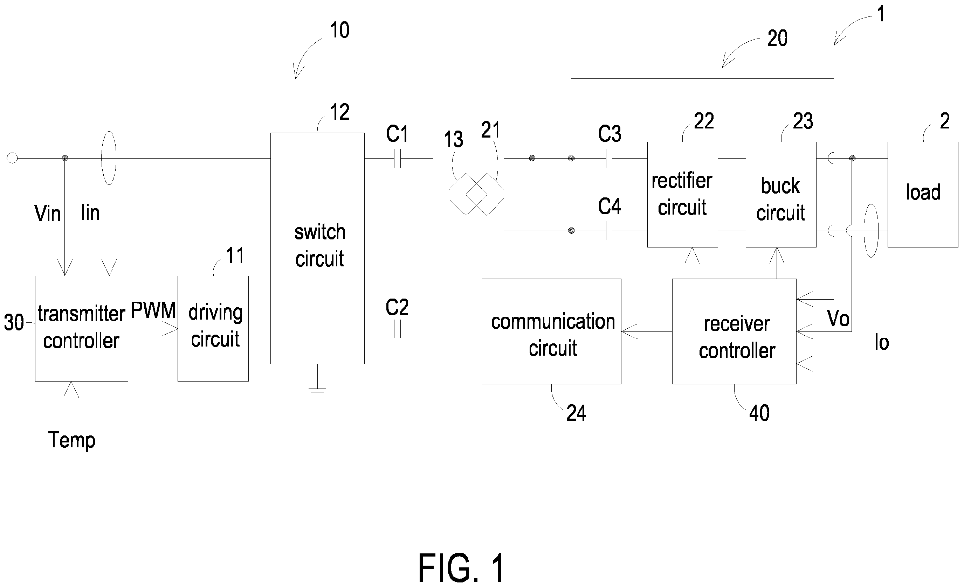

FIG. 1 is a schematic block diagram illustrating a wireless charging system according to an embodiment of the present disclosure. As shown in FIG. 1, the wireless charging system 1 includes a transmitter module 10 and a receiver module 20. The transmitter module 10 is located at a transmitter side of the wireless charging system 1, while the receiver module 20 is located at a receiver side of the wireless charging system 1. The transmitter module 10 receives an input power, converts the input power into an input electric energy, and then transmits the input electric energy. The receiver module 20 is electromagnetically coupled with the transmitter module 10 for wireless power transmission. Through the wireless power transmission, the receiver module 20 receives the input electric energy transmitted by the transmitter module 10. The receiver module 20 converts the received input electric energy into an output electric energy, and provides the output electric energy to a load 2. In addition, the transmitter module 10 includes a transmitter controller 30 configured to provide a driving signal PWM to the transmitter module 10 for controlling the transmitter module 10 to operate in a normal mode, and the driving signal PWM has a switching cycle. The receiver module 20 includes a receiver controller 40 configured to control the operation of the receiver module 20.

During the operation of the wireless charging system 1, the transmitter controller 30 samples the input power (e.g., through sampling the input voltage Vin and input current Iin), and detects a component temperature Temp within the transmitter module 10. When the input power is higher than a threshold power or when the component temperature Temp is higher than a threshold temperature (i.e., the input power or the component temperature Temp is too high), the transmitter controller 30 switches the transmitter module 10 to operate in the adjustment mode. In the adjustment mode, the transmitter controller 30 controls the transmitter module 10 to interrupt the driving signal PWM for a specific number of times within a charging cycle, and the specific number of times of interrupting the driving signal PWM depends on a magnitude of the input power or the component temperature Temp. The receiver controller 40 knows the specific number of times of the transmitter module 10 interrupting the driving signal PWM within the charging cycle by sampling the input electric energy received by the receiver module 20. According to the specific number of times, the receiver controller 40 turns down the output power of the output electric energy. As the output power is reduced, the input power received by the transmitter module 10 is allowed to decrease correspondingly.

A relation between the specific number of times and a reduction margin of the output power may be determined according to practical requirements. For example, when the specific number of times of the transmitter module 10 interrupting the driving signal PWM within the charging cycle is equal to n, the receiver controller 40 turns down the output power to (100-n* 10)% of the rated power, where n is a positive integer less than ten. In addition, the said charging cycle is preset in the transmitter controller 30 and the receiver controller 40 and may be adjusted according to practical requirements.

It is noted that a duration of the transmitter module 10 interrupting the driving signal PWM each time (e.g., one switching cycle of the driving signal PWM) is much shorter than a duration of the charging cycle. Therefore, the interruption of the driving signal PWM would not affect the wireless power transmission between the transmitter module 10 and the receiver module 20 actually. In other words, in the adjustment mode, the interruption of the driving signal PWM doesn't affect the continuity and stability of the wireless power transmission.

Consequently, when the distance between the transmitter module 10 and the receiver module 20 increases, the receiver module 20 can turn down the output power immediately, so that the input power decreases correspondingly. Thereby, the input power is prevented from getting too high and triggering the protection function to interrupt the power transmission. Accordingly, the stability of wireless power transmission is improved.

Moreover, after the output power is reduced, if the input power is lower than a restoration power and the component temperature Temp is lower than a restoration temperature (which means that the protection function would not be triggered), the transmitter controller 30 controls the transmitter module 10 to return to the normal mode again. Under this circumstance, by sampling the received input electric energy, the receiver controller 40 realizes that the transmitter module 10 operates in the normal mode with generating normal input electric energy. Correspondingly, the receiver controller 40 increases the output power (e.g., increasing the output power to a rated power). The restoration power is for example but not limited to equal 80% of the threshold power, and the restoration temperature is for example but not limited to equal 80% of the threshold temperature.

In addition, in an embodiment, if the input power is not lower than the restoration power and/or the component temperature Temp is not lower than the restoration temperature (i.e., at least one condition is satisfied), the transmitter module 10 still generates the input electric energy corresponding to a target output power, and the receiver module 20 receives and converts the input electric energy into the target output power.

In the embodiment shown in FIG. 1, the transmitter module 10 further includes a driving circuit 11, a switch circuit 12, a transmitter coil 13, a first capacitor C1, and a second capacitor C2. The driving circuit 11 is electrically connected to the transmitter controller 30, and the switch circuit 12 is electrically connected to the driving circuit 11. The driving circuit 11 and the switch circuit 12 are configured to convert the input power into the input electric energy according to the driving signal. In the adjustment mode, when the driving signal PWM is interrupted, switches of the switch circuit 12 are all in an off state. The transmitter coil 13 is coupled to the switch circuit 12, and configured to transmit the input electric energy. The first capacitor C1 is connected between the switch circuit 12 and the transmitter coil 13, and configured to match with the transmitter coil 13. The second capacitor C2 is connected between the switch circuit 12 and the transmitter coil 13, and configured to match with the transmitter coil 13.

The receiver module 20 further includes a receiver coil 21, a rectifier circuit 22, a buck circuit 23, a communication circuit 24, a third capacitor C3, and a fourth capacitor C4. The receiver coil 21 is configured to receive the input electric energy. The rectifier circuit 22 is coupled to the receiver coil 21, and the buck circuit 23 is electrically connected to the rectifier circuit 22. The rectifier circuit 22 and the buck circuit 23 are configured to convert the input electric energy into the output electric energy and performs rectification and voltage reduction during the conversion process, respectively. The communication circuit 24 is electrically connected to the receiver coil 21, and configured to reflect the operating status of the receiver module 20 to the transmitter module 10. The third capacitor C3 is electrically connected between the receiver coil 21 and the rectifier circuit 22, and configured to match with the receiver coil 21. The fourth capacitor C4 is electrically connected between the receiver coil 21 and the rectifier circuit 22, and configured to match with the receiver coil 21.

In addition, the transmitter controller 30 may interrupt the driving signal PWM through various ways, and several possible ways are exemplified as follows.

In the embodiment shown in FIG. 1, the transmitter controller 30 directly interrupts the generated driving signal PWM.

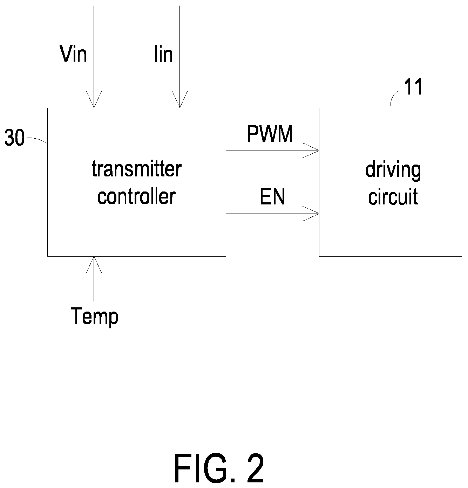

In the embodiment shown in FIG. 2, the transmitter controller 30 provides the driving signal PWM and an enable signal EN to the driving circuit 11 through different ports respectively, and the enable signal EN is utilized to interrupt the driving signal PWM. For example, when the enable signal EN is at a high level, the driving signal PWM is interrupted, and the driving circuit 11 controls the switches of the switch circuit 12 to be in the off state, thereby stopping the operation of the transmitter module 10. Conversely, when the enable signal EN is at a low level, the driving circuit 11 drives the switch circuit 12 according to the driving signal PWM.

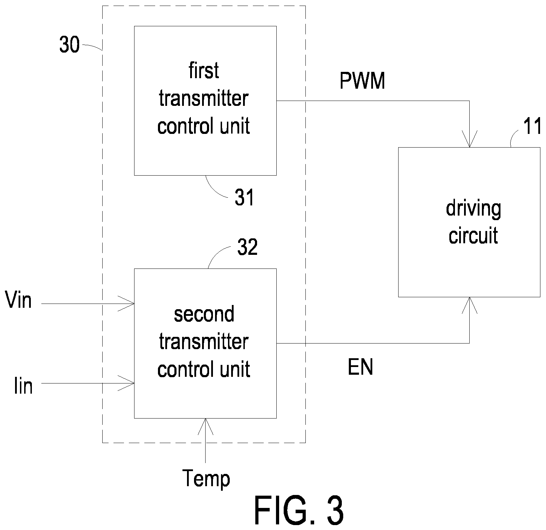

In the embodiment shown in FIG. 3, the transmitter controller 30 includes a first transmitter control unit 31 configured to provide the driving signal PWM to the driving circuit 11, and a second transmitter control unit 32 configured to provide the enable signal EN to the driving circuit 11, so that the enable signal EN is utilized to interrupt the driving signal PWM. In an embodiment, the first transmitter control unit 31 and the second transmitter control unit 32 are not integrated into a single transmitter controller 30. In specific, the second transmitter control unit 32 is an additional controller for the conventional wireless charging control system, and configured to detect power and temperature levels and interrupt the driving signal PWM, thereby adding the adjustment mode to the conventional wireless charging control system.

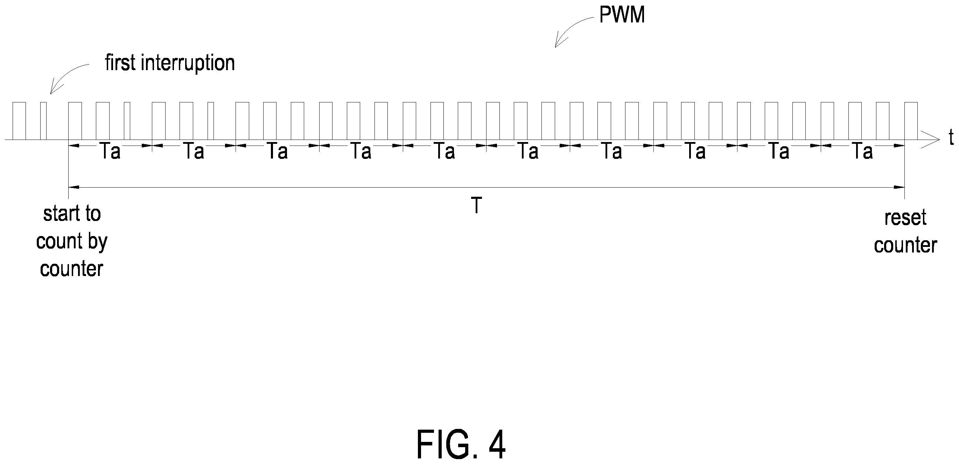

FIG. 4 is a schematic oscillogram showing the interrupted driving signal PWM according to an embodiment of the present disclosure. The transmitter controller 30 of FIG. 1 can generate the driving signal PWM shown in FIG. 4. In FIG. 4, T represents a duration of the charging cycle, and Ta represents an interval between two interruptions. Specifically, the transmitter controller 30 determines the number of interruptions according to the input power or the component temperature Temp. Then, during a (i*a)-th switching cycle, the driving signal PWM is interrupted once to modulate information of the target output power into the input electric energy, where "a" represents the number of switching cycles between two interruptions, 0 ≤ i ≤ (n-1), i*a is less than or equal to the charging cycle T, "n" is the number of interruptions, and "a", "i" and "n" are positive integers. In this embodiment, "n" equals 3, "a" equals 3, and the charging cycle T is equal to thirty switching cycles, resulting in the target output power equal to 70% (=(100-3*10)%) of the rated power. In this way, the transmitter controller 30 modulates the information of the target output power into the input electric energy.

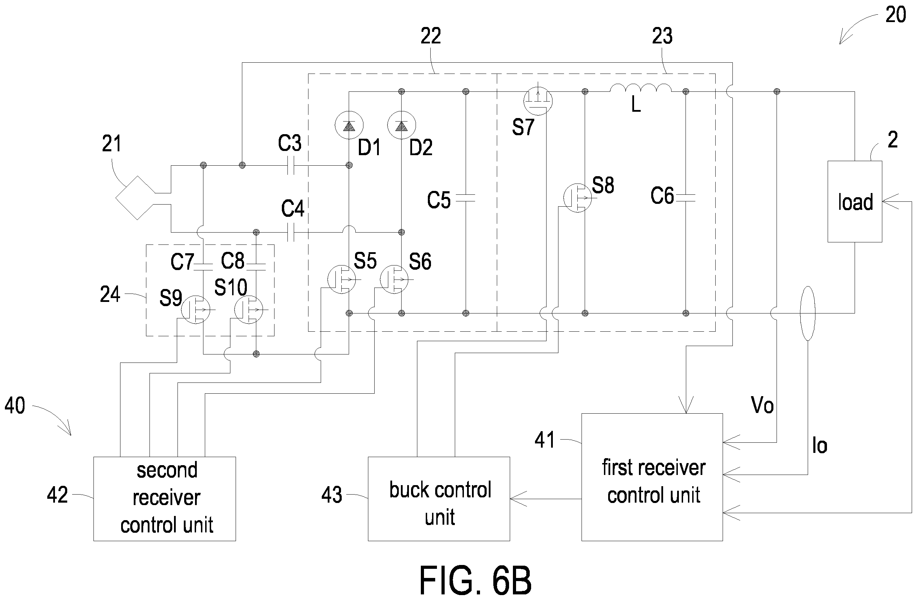

Afterwards, the receiver controller 40 of FIG. 1 (or a first receiver control unit 41 of FIG. 6B) samples the driving signal PWM (i.e., the input electric energy) by capturing a falling edge of one switching cycle and a rising edge of a next switching cycle. When the receiver controller 40 detects that a time difference between said falling and rising edges is greater than a half of the switching cycle for the first time, the first counter starts to count the charging cycle T, and the second counter starts to count the number of interruptions. When the charging cycle T ends, the receiver controller 40 reads the number of interruptions counted by the second counter, and the first and second counters are reset. Since the number of interruptions is associated with the information of the target output power, the receiver module 20 may demodulate the information of the target output power according to the number of interruptions.

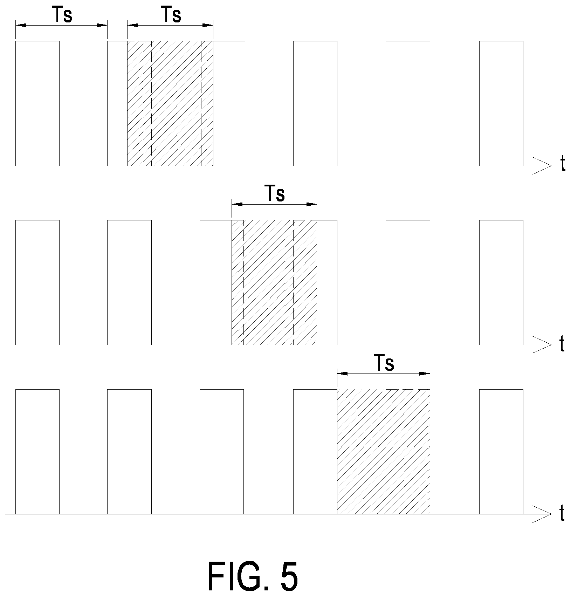

FIG. 5 is a schematic oscillogram showing the interrupted driving signal PWM according to plural embodiments of the present disclosure. In FIG. 5, Ts represents the duration of the switching cycle of the driving signal PWM, the sampled signal during the transmitter module 10 operating in the adjustment mode is depicted by solid lines, the sampled signal during the transmitter module 10 operating in the normal mode is depicted by dashed lines for comparison, and the period of the transmitter module 10 being interrupted is indicated by shaded areas. As shown in FIG. 5, regardless of the timing of the transmitter module 10 being interrupted, the receiver controller 40 may determine whether the driving signal PWM is interrupted according to the duration from the falling edge of one cycle to the rising edge of the next cycle in the sampled signal. Every time the duration of charging cycle T has ended, the receiver controller 40 accumulates the number of interruptions in the driving signal PWM within the charging cycle T.

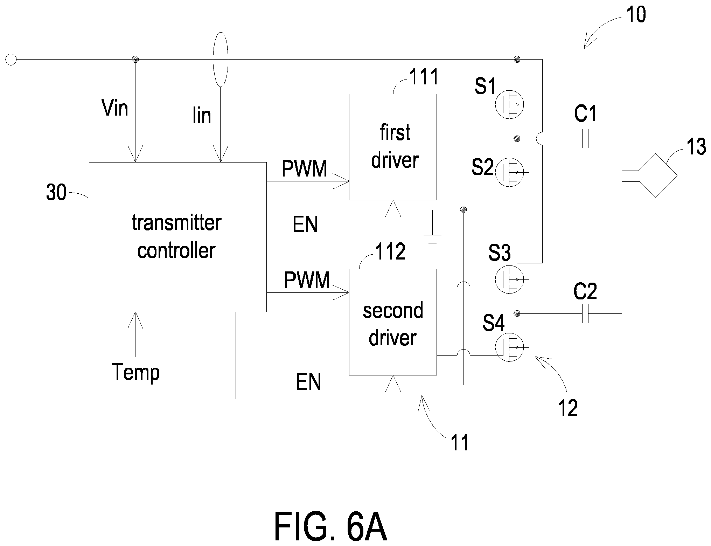

FIG. 6A exemplifies an implementation of the transmitter module 10 and transmitter controller 30 of FIG. 1. As shown in FIG. 6A, the switch circuit 12 is a full-bridge switch circuit including switches S1, S2, S3 and S4. The switches S1 and S2 are electrically connected in series, the switches S3 and S4 are electrically connected in series, and a bridge arm formed by the switches S 1 and S2 are electrically connected in parallel to a bridge arm formed by the switches S3 and S4. A common connection node between the switches S1 and S2 is connected to the capacitor C1, and a common connection node between the switches S3 and S4 is connected to the capacitor C2. The driving circuit 11 includes a first driver 111 and a second driver 112. The first driver 111 receives the driving signal PWM and the enable signal EN from the transmitter controller 30, and controls the operation of switches S1 and S2 accordingly. Similarly, the second driver 112 receives the driving signal PWM and the enable signal EN from the transmitter controller 30, and controls the operation of switches S3 and S4 accordingly.

FIG. 6B exemplifies an implementation of the receiver module 20 and receiver controller 40 of FIG. 1. As shown in FIG. 6B, the rectifier circuit 22 includes diodes D1 and D2, switches S5 and S6, and a capacitor C5. The diode D1 and the switch S5 are electrically connected in series, and the diode D2 and the switch S6 are electrically connected in series. A bridge arm formed by diode D1 and switch S5, a bridge arm formed by diode D2 and switch S6, and the capacitor C5 are electrically connected in parallel with each other. The buck circuit 23 includes switches S7 and S8, an inductor L, and a capacitor C6. Two terminals of the switch S7 are electrically connected to a first terminal of capacitor C5 and a first terminal of switch S8, respectively. Two terminals of the inductor L are electrically connected to the first terminal of the switch S8 and a first terminal of the capacitor C6. A second terminal of the switch S8 is electrically connected to a second terminal of the capacitor C5 and a second terminal of the capacitor C6. The communication circuit 24 includes capacitors C7 and C8 and switches S9 and S10. A first terminal of the capacitor C7 is electrically connected between the receiver coil 21 and the capacitor C3, and a second terminal of the capacitor C7 is electrically connected to a first terminal of the switch S9. A first terminal of the capacitor C8 is electrically connected between the receiver coil 21 and the capacitor C4, and a second terminal of the capacitor C8 is electrically connected to a first terminal of the switch S10. A second terminal of the switch S9 is electrically connected to a second terminal of the switch S10.

The receiver controller 40 of the receiver module 20 includes a first receiver control unit 41, a second receiver control unit 42, and a buck control unit 43. The first receiver control unit 41 is electrically connected to the buck circuit 23 and the receiver coil 21. The buck control unit 43 is electrically connected to the buck circuit 23 and the first receiver control unit 41, and configured to control the operation of the buck circuit 23. The first receiver control unit 41 samples an output voltage Vo and an output current Io to provide a control signal for the buck control unit 43 to control the operation of the buck circuit 23. In addition, the first receiver control unit 41 further samples the input electric energy received by the receiver module 20 so that the first receiver control unit 41 knows the number of interruptions in the driving signal PWM when the transmitter module 10 switches to the adjustment mode. According to the number of interruptions, the first receiver control unit 41 provides the corresponding control signal for the buck control unit 43 to control the buck control unit 23 to turn down the output power. Further, the first receiver control unit 41 may communicate with the load 2 to receive an operating status of the load 2 and correspondingly adjust the operation of the receiver module 20. The second receiver control unit 42 is electrically connected to the rectifier circuit 22 and the communication circuit 24, and configured to control the operations of the rectifier circuit 22 and the communication circuit 24.

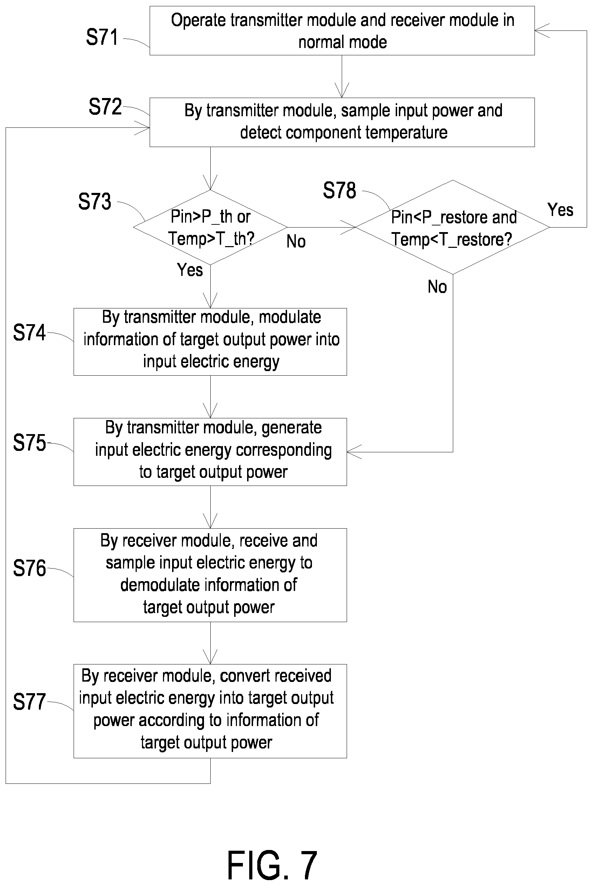

FIG. 7 is a schematic flow chart illustrating a wireless charging method according to an embodiment of the present disclosure. The wireless charging method of FIG. 7 is applicable for the wireless charging system 1 of FIG. 1 and includes the following steps.

Step S71: operate the transmitter module 10 and the receiver module 20 in the normal mode.

Step S72: by the transmitter module 10, sample the input power and detect the component temperature Temp.

Step S73: by the transmitter module 10, determine whether the input power Pin is higher than the threshold power P_th or the component temperature Temp is higher than the threshold temperature T_th. If yes, proceed to step S74; if no, proceed to step S78.

Step S74: by the transmitter module 10, modulate the information of the target output power into the input electric energy. In step S74, the transmitter module 10 switches to the adjustment mode in which the transmitter module 10 is controlled to interrupt the driving signal PWM a specific number of times within the charging cycle T, and the specific number of times depends on the magnitude of the input power Pin or the component temperature Temp.

Step S75: by the transmitter module 10, generate the input electric energy corresponding to the target output power. It is noted that if both the transmitter module 10 and the receiver module 20 operate in the normal mode, the target output power is equal to the rated power.

Step S76: by the receiver module 20, receive and sample the input electric energy to demodulate the information of the target output power.

Step S77: by the receiver module 20, convert the received input electric energy into the target output power according to the information of the target output power. In this embodiment, the receiver module 20 determines the specific number of times of interrupting the driving signal PWM by sampling the input electric energy, and the receiver module 20 turns down the power of the received input electric energy to the target output power according to the number of interruptions. After performing step S77, the step S72 is performed again to continue monitoring the input power Pin and the component temperature Temp.

Step S78: by the transmitter module 10, determine whether the input power Pin is lower than the restoration power P_restore and the component temperature Temp is lower than the restoration temperature T_restore. If the determination result of step S78 is positive, the step S71 is performed. Namely, the transmitter module 10 returns to the normal mode, and the receiver module 20 realizes that the transmitter module 10 operates in the normal mode by sampling the input electric energy. If the determination result of step S78 is negative, proceeding to step S75.

In an embodiment, the step S74 includes: determine the number of interruptions according to the input power Pin or the component temperature Temp; and interrupt the driving signal PWM once during the (i*a)-th switching cycle to modulate the information of the target output power into the input electric energy. "a" represents the number of switching cycles between two interruptions, 0 ≤ i ≤ (n-1), i*a is less than or equal to the charging cycle T, "n" is the number of interruptions, and "a", "i" and "n" are positive integers. In this way, the transmitter controller 30 modulates the information of the target output power into the input electric energy.

In an embodiment, the step S76 includes: sample the input electric energy by capturing the falling edge of one switching cycle and the rising edge of the next switching cycle; when the time difference between said falling and rising edges is detected to be greater than half a switching cycle for the first time, start to count the charging cycle T by the first counter and start to count the number of interruptions by the second counter; and when the charging cycle T ends, read the number of interruptions counted by the second counter. In addition, when the charging cycle T ends, the first and second counters are reset. Since the number of interruptions is associated with the information of the target output power, the receiver module 20 may demodulate the information of the target output power according to the number of interruptions.

Through the wireless charging method shown in FIG. 7, the transmitter module 10 can actively reduce the power of the input electric energy so that the foreign object detection, the low-voltage protection and the over-temperature protection would not be triggered immediately, thereby improving a continuity and a stability of power transmission.

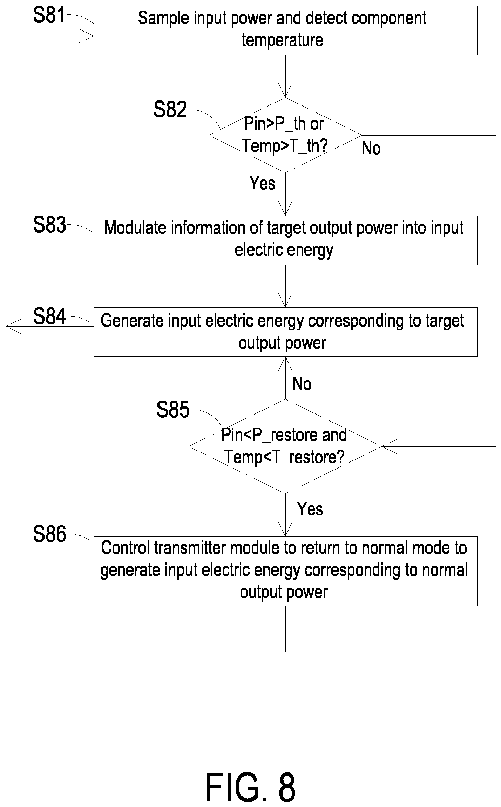

FIG. 8 is a schematic flow chart illustrating a wireless charging control method adapted for the transmitter module according to an embodiment of the present disclosure. A memory may be integrated into the transmitter controller 30 of FIG. 1 and the second transmitter control unit 32 of FIG. 3. Correspondingly, the wireless charging control method of FIG. 8 may be compiled into programmed codes stored in the memory, and includes the following steps:
Step S81: sample the input power Pin and detect the component temperature Temp.
Step S82: determine whether the input power Pin is higher than the threshold power P_th or the component temperature Temp is higher than the threshold temperature T_th. If yes, proceeding to step S83; if no, proceeding to step S85.
Step S83: modulate the information of the target output power into the input electric energy.
Step S84: generate the input electric energy corresponding to the target output power.
Step S85: determine whether the input power Pin is lower than the restoration power P_restore and the component temperature Temp is lower than the restoration temperature T_restore. If yes, proceed to step S86; if no, proceed to step S84.
Step S86: control the transmitter module 10 to return to the normal mode to generate the input electric energy corresponding to the normal output power. Then, the step S81 is performed again.

More details on the wireless charging control method of FIG. 8 may be obtained by referring to the relevant explanations of FIGS. 1-6B, which are omitted herein.

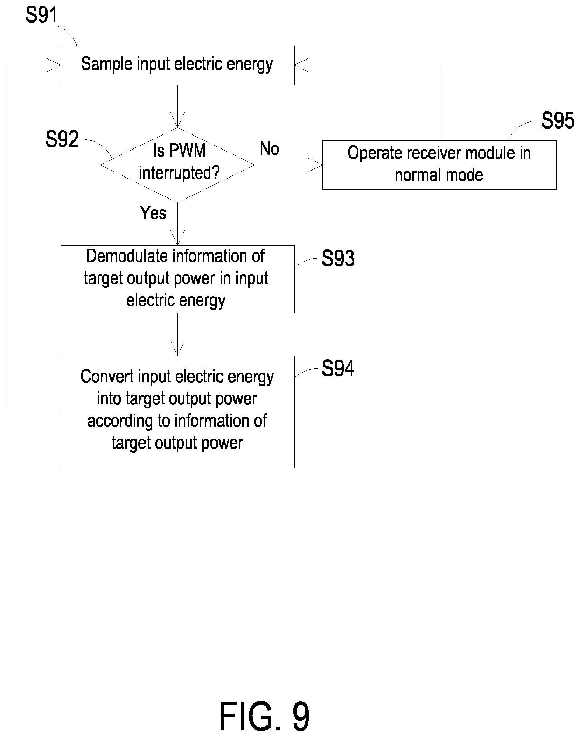

FIG. 9 is a schematic flow chart illustrating a wireless charging control method adapted for the receiver module according to an embodiment of the present disclosure. A memory may be integrated into the receiver controller 40 of FIG. 1 and the first receiver control unit 41 of FIG. 6B. Correspondingly, the wireless charging control method of FIG. 9 may be compiled into programmed codes stored in the memory, and includes the following steps:
Step S91: sample the input electric energy.
Step S92: determine if the driving signal PWM is interrupted. If yes, proceeding to step S93; if no, proceeding to step S95.
Step S93: demodulate the information of the target output power in the input electric energy.
Step S94: convert the input electric energy into the target output power according to the information of the target output power.
Step S95: operate in the normal mode. Then, the step S91 is performed again.

More details on the wireless charging control method of FIG. 9 may be obtained by referring to the relevant explanations of FIGS. 1-6B, which are omitted herein.

In summary, the present disclosure provides a wireless charging control method and a wireless charging system employing the same. When the input power or the component temperature at the transmitter side is too high, the transmitter circuit is controlled to operate in a special adjustment mode. The receiver side realizes that the transmitter circuit operates in the adjustment mode by sampling the received power and corresponding turns down the output power so that the input power is allowed to decrease. Thereby, as the distance between the transmitter and receiver sides increases, the input power is prevented from getting too high and triggering the protection function to interrupt the power transmission. Accordingly, the stability of wireless power transmission is improved.

## Claims

1. A wireless charging control method of a wireless charging system (1) comprising a transmitter module (10) and a receiver module (20), the wireless charging control method **characterized by** comprising steps of:
(a) by the transmitter module (10), when an input power (Pin) is higher than a threshold power (P_th) or a component temperature (Temp) is higher than a threshold temperature (T_th), determining a target output power according to the input power (Pin) or the component temperature (Temp);
(b) by the transmitter module (10), modulating information of the target output power into an input electric energy;
(c) by the receiver module (20), receiving and sampling the input electric energy to demodulate the information of the target output power; and
(d) by the receiver module (20), converting the input electric energy into the target output power according to the information of the target output power.

2. The wireless charging control method according to claim 1, wherein the input electric energy includes a pulse width modulation signal, and the step (b) comprises:
(b1) determining a number of interruptions according to the input power (Pin) or the component temperature (Temp); and
(b2) interrupting a driving signal (PWM) of the transmitter module (10) once during a (i*a)-th switching cycle to modulate the information of the target output power into the input electric energy,
wherein "a" represents a number of switching cycles between two interruptions, 0 ≤ i ≤ (n-1), i*a is less than or equal to a charging cycle, "n" is the number of interruptions, and "a", "i" and "n" are positive integers.

3. The wireless charging control method according to claim 2, wherein the step (c) comprises:
(c1) sampling the input electric energy by capturing a falling edge of one switching cycle and a rising edge of a next switching cycle;
(c2) when a time difference between the falling edge and the rising edge is detected to be greater than a half of the switching cycle for the first time, starting to count the charging cycle (T) by a first counter and starting to count the number of interruptions by a second counter; and
(c3) when the charging cycle (T) ends, reading the number of interruptions counted by the second counter,
wherein when the charging cycle (T) ends, the first counter and the second counter are reset, and the number of interruptions is associated with the information of the target output power.

4. The wireless charging control method according to claim 2, wherein number of interruptions indicates that the target output power is equal to (100-n* 10)% of a rated power, and n is a positive integer less than ten.

5. The wireless charging control method according to claim 2, wherein the step (b2) comprises generating an enable signal (EN) to the transmitter module (10) for interrupting the driving signal (PWM).

6. The wireless charging control method according to claim 1, further comprising steps of:
(e) by the transmitter module (10), when at least one of a first condition that the input power (Pin) is not lower than a restoration power (P_restore) and a second condition that the component temperature (Temp) is not lower than a restoration temperature (T_restore) is satisfied, generating the input electric energy according to a target output power; and
(f) by the receiver module (20), receiving and converting the input electric energy into the target output power.

7. The wireless charging control method according to claim 6, further comprising steps of:
(g) by the transmitter module (10), when the input power (Pin) is lower than the restoration power (P_restore) and the component temperature (Temp) is lower than the restoration temperature (T_restore), returning to a normal mode to generate a normal input electric energy; and
(h) by the receiver module (20), receiving and sampling the normal input electric energy to operate in the normal mode.

8. The wireless charging control method according to claim 6, wherein the restoration power (P_restore) is equal to 80% of the threshold power (P_th), and the restoration temperature (T_restore) is equal to 80% of the threshold temperature (T_th).

9. A wireless charging system (1), **characterized by** comprising:
a transmitter module (10) configured to convert an input power (Pin) into an input electric energy and transmit the input electric energy; and
a receiver module (20) configured to receive the input electric energy, convert the input electric energy into an output electric energy, and provide the output electric energy to a load (2),
wherein the transmitter module (10) and the receiver module (20) are configured to perform the wireless charging control method as claimed in claim 1.

10. The wireless charging system (1) according to claim 9, wherein the transmitter module (10) comprises:
a transmitter controller (30) configured to sample an input power (Pin), detect a component temperature (Temp), and generate a driving signal (PWM);
a driving circuit (11) electrically connected to the transmitter controller (30);
a switch circuit (12) electrically connected to the driving circuit (11), wherein the driving circuit (11) and the switch circuit (12) are configured to convert the input power (Pin) into the input electric energy according to the driving signal (PWM);
a transmitter coil (13) coupled to the switch circuit (12), and configured to transmit the input electric energy;
a first capacitor (C1) connected between the switch circuit (12) and the transmitter coil (13), and configured to match with the transmitter coil (13); and
a second capacitor (C2), connected between the switch circuit (12) and the transmitter coil (13), and configured to match with the transmitter coil (13).

11. The wireless charging system (1) according to claim 10, wherein the transmitter controller (30) comprises:
a first transmitter control unit (31) electrically connected to the driving circuit (11), and configured to generate the driving signal (PWM) for the driving circuit (11); and
a second transmitter control unit (32) electrically connected to the driving circuit (11), and configured to generate an enable signal (EN) for the driving circuit (11) according to the input power (Pin) and the component temperature (Temp), wherein the enable signal (EN) is utilized to interrupt the driving signal (PWM).

12. The wireless charging system (1) according to claim 9, wherein the receiver module (20) comprises:
a receiver coil (21) configured to receive the input electric energy;
a rectifier circuit (22) coupled to the receiver coil (21);
a buck circuit (23) electrically connected to the rectifier circuit (22), wherein the rectifier circuit (22) and the buck circuit (23) are configured to convert the input electric energy into the output electric energy;
a first receiver control unit (41) electrically connected to the buck circuit (23) and the receiver coil (21), and configured to the sample the input electric energy;
a third capacitor (C3) electrically connected between the receiver coil (21) and the rectifier circuit (22), and configured to match with the receiver coil (21); and
a fourth capacitor (C4) electrically connected between the receiver coil (21) and the rectifier circuit (22), and configured to match with the receiver coil (21).

13. The wireless charging system (1) according to claim 12, wherein the receiver module (20) further comprises:
a communication circuit (24) electrically connected to the receiver coil (21), and configured to reflect an operating status of the receiver module (20) to the transmitter module (10);
a second receiver control unit (42) electrically connected to the rectifier circuit (22) and the communication circuit (24), and configured to control operation of the rectifier circuit (22) and the communication circuit (24); and
a buck control unit (43) electrically connected to the buck circuit (23) and the first receiver control unit (41), and configured to control operation of the buck circuit 23.

## Amended claims

### Amended claims in accordance with Rule 137(2) EPC.

1. A wireless charging control method of a wireless charging system (1) comprising a transmitter module (10) and a receiver module (20), the wireless charging control method **characterized by** comprising steps of:
(a) by the transmitter module (10), when an input power, Pin, is higher than a threshold power, P_th, or a component temperature (Temp) is higher than a threshold temperature, T_th, determining a target output power according to the input power, Pin, or the component temperature (Temp);
(b) by the transmitter module (10), modulating information of the target output power into an input electric energy;
(c) by the receiver module (20), receiving and sampling the input electric energy to demodulate the information of the target output power; and
(d) by the receiver module (20), converting the input electric energy into the target output power according to the information of the target output power.

2. The wireless charging control method according to claim 1, wherein the input electric energy includes a pulse width modulation signal, and the step (b) comprises:
(b1) determining a number of interruptions according to the input power, Pin, or the component temperature (Temp); and
(b2) interrupting a driving signal (PWM) of the transmitter module (10) once during a (i*a) - th switching cycle to modulate the information of the target output power into the input electric energy,
wherein "a" represents a number of switching cycles between two interruptions, 0 ≤ i ≤ (n-1), i*a is less than or equal to a charging cycle, "n" is the number of interruptions, and "a", "i" and "n" are positive integers.

3. The wireless charging control method according to claim 2, wherein the step (c) comprises:
(c1) sampling the input electric energy by capturing a falling edge of one switching cycle and a rising edge of a next switching cycle;
(c2) when a time difference between the falling edge and the rising edge is detected to be greater than a half of the switching cycle for the first time, starting to count the charging cycle (T) by a first counter and starting to count the number of interruptions by a second counter; and
(c3) when the charging cycle (T) ends, reading the number of interruptions counted by the second counter,
wherein when the charging cycle (T) ends, the first counter and the second counter are reset, and the number of interruptions is associated with the information of the target output power.

4. The wireless charging control method according to claim 2, wherein number of interruptions indicates that the target output power is equal to (100 - n*10) % of a rated power, and n is a positive integer less than ten.

5. The wireless charging control method according to claim 2, wherein the step (b2) comprises generating an enable signal (EN) to the transmitter module (10) for interrupting the driving signal (PWM).

6. The wireless charging control method according to claim 1, further comprising steps of:
(e) by the transmitter module (10), when at least one of a first condition that the input power (Pin) is not lower than a restoration power, P_restore, and a second condition that the component temperature (Temp) is not lower than a restoration temperature, T_restore, is satisfied, generating the input electric energy according to a target output power; and
(f) by the receiver module (20), receiving and converting the input electric energy into the target output power.

7. The wireless charging control method according to claim 6, further comprising steps of:
(g) by the transmitter module (10), when the input power (Pin) is lower than the restoration power, P_restore, and the component temperature (Temp) is lower than the restoration temperature, T_restore, returning to a normal mode to generate a normal input electric energy; and
(h) by the receiver module (20), receiving and sampling the normal input electric energy to operate in the normal mode.

8. The wireless charging control method according to claim 6, wherein the restoration power, P_restore, is equal to 80% of the threshold power (P_th), and the restoration temperature, T_restore, is equal to 80% of the threshold temperature, T_th.

9. A wireless charging system (1), **characterized by** comprising:
a transmitter module (10) configured to convert an input power, Pin, into an input electric energy and transmit the input electric energy; and
a receiver module (20) configured to receive the input electric energy, convert the input electric energy into an output electric energy, and provide the output electric energy to a load (2),
wherein the transmitter module (10) and the receiver module (20) are configured to perform the wireless charging control method as claimed in claim 1.

10. The wireless charging system (1) according to claim 9, wherein the transmitter module (10) comprises:
a transmitter controller (30) configured to sample an input power, Pin), detect a component temperature (Temp), and generate a driving signal (PWM);
a driving circuit (11) electrically connected to the transmitter controller (30);
a switch circuit (12) electrically connected to the driving circuit (11), wherein the driving circuit (11) and the switch circuit (12) are configured to convert the input power (Pin) into the input electric energy according to the driving signal (PWM);
a transmitter coil (13) coupled to the switch circuit (12), and configured to transmit the input electric energy;
a first capacitor (C1) connected between the switch circuit (12) and the transmitter coil (13), and configured to match with the transmitter coil (13); and
a second capacitor (C2), connected between the switch circuit (12) and the transmitter coil (13), and configured to match with the transmitter coil (13).

11. The wireless charging system (1) according to claim 10, wherein the transmitter controller (30) comprises:
a first transmitter control unit (31) electrically connected to the driving circuit (11), and configured to generate the driving signal (PWM) for the driving circuit (11); and
a second transmitter control unit (32) electrically connected to the driving circuit (11), and configured to generate an enable signal (EN) for the driving circuit (11) according to the input power (Pin) and the component temperature (Temp), wherein the enable signal (EN) is utilized to interrupt the driving signal (PWM).

12. The wireless charging system (1) according to claim 9, wherein the receiver module (20) comprises:
a receiver coil (21) configured to receive the input electric energy;
a rectifier circuit (22) coupled to the receiver coil (21);
a buck circuit (23) electrically connected to the rectifier circuit (22), wherein the rectifier circuit (22) and the buck circuit (23) are configured to convert the input electric energy into the output electric energy;
a first receiver control unit (41) electrically connected to the buck circuit (23) and the receiver coil (21), and configured to the sample the input electric energy;
a third capacitor (C3) electrically connected between the receiver coil (21) and the rectifier circuit (22), and configured to match with the receiver coil (21); and
a fourth capacitor (C4) electrically connected between the receiver coil (21) and the rectifier circuit (22), and configured to match with the receiver coil (21).

13. The wireless charging system (1) according to claim 12, wherein the receiver module (20) further comprises:
a communication circuit (24) electrically connected to the receiver coil (21), and configured to reflect an operating status of the receiver module (20) to the transmitter module (10);
a second receiver control unit (42) electrically connected to the rectifier circuit (22) and the communication circuit (24), and configured to control operation of the rectifier circuit (22) and the communication circuit (24); and
a buck control unit (43) electrically connected to the buck circuit (23) and the first receiver control unit (41), and configured to control operation of the buck circuit (23).
